# FASCICULE DE BREVET EUROPEEN

(11) **EP 3 877 161 B1**
(45) Date de publication et mention de la délivrance du brevet: **14.05.2025**
(21) Numéro de dépôt: 19839372.0
(22) Date de dépôt: 10.12.2019
(51) Int. Cl.: B29C 70/44, B29C 43/20, B29C 70/46, B29C 70/54, B30B 5/02, B29C 33/00, B29C 33/02, B29C 33/04, B29C 43/52, B29C 43/36, B30B 15/34, B29L 31/30, B29L 31/00

(54) **MOULE DE CUISSON POUR FABRIQUER UNE PIECE DE TURBOMACHINE EN MATERIAU COMPOSITE A PARTIR D'UNE PREFORME ET PROCEDE DE FABRICATION D'UNE PIECE AU MOYEN D'UN TEL MOULE**
AUSHÄRTFORM ZUR HERSTELLUNG EINER AUS VERBUNDSTOFFMATERIAL AUS EINER VORFORM GEFERTIGTEN TURBOMASCHINENKOMPONENTE UND VERFAHREN ZUR FERTIGUNG EINER KOMPONENTE MITTELS SOLCH EINER FORM
CURING MOLD FOR MANUFACTURING A TURBOMACHINE COMPONENT MADE OF COMPOSITE MATERIAL FROM A PREFORM AND METHOD FOR MANUFACTURING A COMPONENT BY MEANS OF SUCH A MOLD

(30) Priorité: 14.12.2018 FR 1872924
(43) Date de publication de la demande: 15.09.2021
(73) Titulaire: SAFRAN, 75015 Paris (FR)
(72) Inventeur: OLHAGARAY, Jérôme, 77550 MOISSY-CRAMAYEL (FR); CHAUVIN, Thierry, 77550 MOISSY-CRAMAYEL (FR); HOES, Kris, 77550 MOISSY-CRAMAYEL (FR); WLASOW WLASOWSKI, Michel, 77550 MOISSY-CRAMAYEL (FR)
(74) Mandataire: Brevalex
(86) Numéro de dépôt international: PCT/FR2019/053002
(87) Numéro de publication internationale: WO 2020/120896

(56) Documents cités:
- FR-A1- 3 059 266
- JP-A- 2007 253 441
- US-A1- 2014 103 585

## Description

### DOMAINE TECHNIQUE

L'invention concerne un moule de cuisson pour fabriquer une pièce de turbomachine en matériau composite à partir d'une préforme, un procédé de fabrication d'une pièce de turbomachine en matériau composite au moyen d'un tel moule de cuisson et une pièce de turbomachine en matériau composite obtenue par la mise en œuvre d'un tel procédé.

### ÉTAT DE LA TECHNIQUE ANTÉRIEURE

Il existe plusieurs procédés connus pour la fabrication de pièce de turbomachine en matériau composite.

Il est par exemple connu de réaliser une préforme de la pièce de turbomachine par drapage à partir de pré-imprégnés, puis de cuire cette préforme afin d'obtenir la pièce de turbomachine.

Il est entendu ici par « pré-imprégné », un produit semi-fini comprenant des fibres de renfort et une résine (matrice) thermodurcissable dans laquelle les fibres de renfort sont imprégnées. De tels pré-imprégnés sont généralement conditionnés sous forme de rouleaux de nappes de fibres, unidirectionnelles et continues, imprégnées par la résine thermodurcissable.

Le drapage des pré-imprégnés est par exemple réalisé par placement automatisé de fibres, aussi appelé « AFP » pour « Automated Fiber Placement » en terminologie anglo-saxonne, qui est une technique de drapage particulièrement adaptée pour les pièces de turbomachine à géométrie complexe, notamment présentant une double courbure.

Pour cela, une tête robotisée de placement de fibres coupe des bandelettes à partir d'une nappe de pré-imprégnés, puis dépose ces bandelettes sur la surface d'un moule de cuisson de forme complémentaire avec une surface de la pièce de turbomachine à fabriquer. Plusieurs bandelettes de pré-imprégnés peuvent être empilées les unes sur les autres, notamment avec des orientations différentes de fibres de renfort, les fibres de renfort restant toutefois perpendiculaires à la direction d'empilement des pré-imprégnés.

La préforme ainsi réalisée est ensuite positionnée sur la surface d'un moule de cuisson de forme complémentaire avec une surface de la pièce de turbomachine à fabriquer, puis elle est recouverte d'une membrane et placée dans un autoclave où la membrane est mise sous vide. Dans l'autoclave, la préforme est cuite dans des conditions contrôlées de température et de pression, de sorte à polymériser la résine et donc à consolider la préforme, et ainsi obtenir la pièce de turbomachine.

Il est généralement reconnu que la cuisson de la préforme en autoclave, du fait des conditions contrôlées de température et de pression, permet d'obtenir des pièces de turbomachine en matériau composite de hautes performances mécaniques.

Toutefois, lorsque la pièce de turbomachine à fabriquer n'autorise que des intervalles de tolérances serrés pour leur géométrie, comme cela est par exemple le cas des carters externes de compresseur basse pression pour turbomachine à double flux, la cuisson en autoclave de la préforme ne peut pas être utilisée, la membrane sous vide et la pression à l'intérieur de l'autoclave ne permettant pas de respecter de tels intervalles de tolérances pour la géométrie de la pièce de turbomachine à fabriquer.

En variante, après le drapage des pré-imprégnés, la préforme peut par exemple être moulée par transfert de même résine qualifiée. Cette technique de moulage est connue sous l'acronyme « SQRTM » correspondant à « Same Qualified Resin Transfer Molding » en terminologie anglo-saxonne.

Cette technique de moulage met en œuvre un moule de cuisson comprenant un premier et une deuxième corps dont des surfaces internes définissent ensemble un entrefer fixe de forme complémentaire avec la pièce de turbomachine à fabriquer, un organe de mise sous vide de l'entrefer, ainsi qu'un piston d'injection de résine dans des canaux qui sont réalisés dans les premier et deuxième corps et qui communiquent avec l'entrefer.

Lors du moulage de la préforme, cette dernière est placée dans l'entrefer du moule de cuisson, entre les premier et deuxième corps, de sorte à laisser, dans l'entrefer, des espaces vides le long des bords libres de la préforme avec lesquelles communiquent les canaux. Les premier et deuxième corps sont ensuite serrés l'un contre l'autre, par exemple au moyen d'une presse, puis l'entrefer est mis sous vide. Le moule de cuisson est chauffé, par exemple au moyen de la presse, tandis que de la résine, identique à celle des pré-imprégnés formant la préforme, est injectée dans les canaux, de sorte à remplir de résine les espaces vides dans l'entrefer situés le long des bords libres de la préforme et ainsi mettre la préforme sous pression hydrostatique dans l'entrefer. Cette pression hydrostatique est maintenue pendant la cuisson de la préforme, qui est ainsi réalisée dans des conditions contrôlées de température et de pression.

Le SQRTM permet ainsi non seulement d'obtenir des pièces de turbomachine de hautes performances mécaniques, du fait de la cuisson de la préforme dans des conditions contrôlées de température et de pression, mais aussi de tenir des intervalles de tolérances serrés pour leur géométrie grâce au moule de cuisson à entrefer fixe. Le fait d'utiliser de la résine identique à celle des pré-imprégnés formant la préforme autorise en outre la mise en œuvre du SQRTM dans le domaine de l'aéronautique, sans qu'il soit nécessaire d'obtenir une nouvelle qualification pour la résine.

Toutefois, le SQRTM présente l'inconvénient de nécessiter un apport supplémentaire de résine pour mettre la préforme sous pression hydrostatique dans l'entrefer, sans que cette résine supplémentaire ne soit conservée une fois la pièce de turbomachine fabriquée, le bord de la préforme étant retiré après démoulage. Il s'agit donc d'une perte de consommable, générant un surcoût non négligeable pour la fabrication des pièces de turbomachine.

Le document JP2007253441A divulgue un moule avec un entrefer variable au moyen de mandrins mobiles en translation et coopérant avec des vessies pour plier la préforme.

### EXPOSÉ DE L'INVENTION

La présente invention a pour but de pallier les inconvénients ci-dessus mentionnés, notamment en proposant un moule de cuisson pour fabriquer une pièce de turbomachine, en matériau composite, à partir d'une préforme réalisée par drapage de pré-imprégnés, à l'intérieur duquel une ou plusieurs vessies gonflables sont prévues pour comprimer un ou des bords de la préforme par gonflage, de sorte à chasser la résine, préalablement chauffée, du ou des bords de la préforme et ainsi appliquer une pression hydrostatique à la préforme.

Plus précisément, l'invention a pour objet un moule de cuisson pour fabriquer une pièce de turbomachine en matériau composite, à partir d'une préforme réalisée par drapage de pré-imprégnés comprenant des fibres de renfort imprégnés dans une résine thermodurcissable, la préforme présentant une portion à mouler et au moins une portion supplémentaire s'étendant dans le prolongement de la portion à mouler et formant un bord de la préforme, le moule de cuisson comprenant :
- un premier corps et un deuxième corps conçus pour être rapportés l'un sur l'autre, le premier et le deuxième corps comprenant chacun une surface interne comprenant elle-même une zone périphérique au niveau de laquelle le premier et le deuxième corps sont en contact l'un avec l'autre et une zone centrale définissant un entrefer fixe entre les premier et deuxième corps, l'entrefer étant destiné à recevoir la préforme et comprenant lui-même :
   ∘ une partie de moulage de forme complémentaire avec la pièce de turbomachine à fabriquer, la partie de moulage étant destinée à recevoir la portion à mouler de la préforme, et
   ∘ au moins une partie supplémentaire située dans un espace périphérique de l'entrefer, la ou chacune des parties supplémentaires étant destinée à recevoir une portion supplémentaire de la préforme ;
- un organe de chauffage conçu pour chauffer la préforme dans l'entrefer à une première température, de sorte à diminuer la viscosité de la résine ;
- au moins une vessie gonflable logée dans la zone centrale de la surface interne du premier ou du deuxième corps, en regard d'une partie supplémentaire de l'entrefer ;
- un organe d'injection d'un fluide conçu pour injecter du fluide sous pression à l'intérieur de la ou des vessies, de sorte à gonfler la ou les vessies depuis un état dégonflé vers un état gonflé, la ou chacune des vessies étant en outre conçue pour comprimer, à l'état gonflé, la portion supplémentaire de la préforme, située dans la partie supplémentaire de l'entrefer en regard de ladite vessie, de sorte à chasser la résine de la portion supplémentaire de la préforme vers la portion à mouler de la préforme et ainsi mettre la préforme sous pression hydrostatique, lorsque la préforme est reçue dans l'entrefer et que l'organe de chauffage chauffe la préforme à la première température.

Selon des variantes de réalisation qui peuvent être prises ensemble ou séparément :
- les fibres de renfort de la préforme sont orientés perpendiculairement par rapport à une direction d'empilement;
- la ou les vessies sont logées dans la zone centrale de la surface interne du premier ou du deuxième corps, localement en alignement avec la portion supplémentaire de la préforme suivant la direction d'empilement de ladite portion supplémentaire, lorsque la préforme est reçue dans l'entrefer du moule de cuisson ;
- l'organe d'injection comprend un compresseur conçu pour mettre sous pression le fluide à injecter dans la ou chacune des vessies et une conduite d'injection en communication d'une part avec le compresseur, et d'autre part avec la ou chacune des vessies, via un ou plusieurs canaux ménagés dans le premier et/ou le deuxième corps ;
- le fluide injecté dans la ou chacune des vessies est un fluide caloporteur ;
- l'organe d'injection comprend un échangeur de chaleur conçu pour chauffer le fluide caloporteur à injecter dans la ou chacune des vessies ;
- l'organe de chauffage est conçu pour chauffer la préforme à une deuxième température, strictement supérieure à la première température, de sorte à cuire la préforme ;
- la ou chacune des vessies est conçue pour poursuivre, à l'état gonflé, la compression exercée sur la portion supplémentaire de la préforme, située dans la partie supplémentaire de l'entrefer en regard de ladite vessie, lorsque la préforme est reçue dans l'entrefer et que l'organe de chauffage chauffe la préforme à la deuxième température.

L'invention a encore pour objet un procédé de fabrication d'une pièce de turbomachine en matériau composite, au moyen du moule de cuisson tel que précédemment décrit, à partir d'une préforme réalisée par drapage de pré-imprégnés comprenant des fibres de renfort imprégnés dans une résine thermodurcissable, la préforme présentant une portion à mouler et au moins une portion supplémentaire s'étendant dans le prolongement de la portion à mouler et formant un bord de la préforme, le procédé comprenant les étapes de :
- mise en place de la préforme dans l'entrefer, entre les premier et deuxième corps du moule, la portion à mouler de la préforme étant logée dans la partie de moulage de l'entrefer, une portion supplémentaire de la préforme étant logée dans la ou dans chacune des parties supplémentaires de l'entrefer ;
- chauffage de la préforme à la première température ;
- injection du fluide sous pression dans la ou dans chacune des vessies, de sorte que la ou chacune des vessies gonfle jusqu'à l'état gonflé et comprime la portion supplémentaire de la préforme située dans la partie supplémentaire de l'entrefer en regard de ladite vessie, la préforme étant maintenue à la première température, la ou chacune des vessies chassant la résine de la portion supplémentaire de la préforme vers la portion à mouler de la préforme, la préforme étant ainsi mise sous pression hydrostatique.

Selon des variantes de réalisation qui peuvent être prises ensemble ou séparément :
- le procédé de fabrication comprend une étape ultérieure de chauffage de la préforme à une deuxième température, strictement supérieure à la première température, de sorte à cuire la préforme et ainsi obtenir la pièce de turbomachine, la compression appliquée par la ou les vessies à l'état gonflé sur la ou les portions supplémentaires de la préforme étant poursuivie ;
- le procédé de fabrication comprend les étapes ultérieures de :
   ∘ relâchement de la compression appliquée par la ou les vessies sur la ou les portions supplémentaires de la préforme ainsi cuite ;
   ∘ démoulage de la préforme ainsi cuite ;
   ∘ retrait de la ou des portions supplémentaires de la préforme ainsi cuite et démoulée, de sorte à obtenir la pièce de turbomachine ;
- la préforme est par exemple mise sous une pression hydrostatique comprise entre 3 et 10 bar inclus, de préférence entre 3 et 7 bar inclus, lors de l'étape d'injection du fluide sous pression dans la ou chacune des vessies ;
- les fibres de renfort de la préforme sont orientés perpendiculairement par rapport à une direction d'empilement;
- la ou les vessies sont logées dans la zone centrale de la surface interne du premier ou du deuxième corps, en alignement avec la portion supplémentaire de la préforme suivant la direction d'empilement de ladite portion supplémentaire, lorsque la préforme est reçue dans l'entrefer du moule de cuisson ;
- le fluide injecté dans la ou chacune des vessies est un fluide caloporteur et l'organe d'injection comprend un échangeur de chaleur conçu pour chauffer le fluide caloporteur à injecter dans la ou chacune des vessies.

### BRÈVE DESCRIPTION DES DESSINS

D'autres aspects, buts, avantages et caractéristiques de l'invention apparaîtront mieux à la lecture de la description détaillée suivante de formes de réalisation préférés de celle-ci, donnée à titre d'exemple non limitatif, et faite en référence aux dessins annexés sur lesquels :
- la figure 1 est une vue en coupe, schématique, d'un moule de cuisson pour fabriquer une pièce de turbomachine en matériau composite, à partir d'une préforme, selon un mode de réalisation de l'invention, le moule de cuisson étant représenté sans la préforme et avec une vessie à l'état dégonflé ;
- la figure 2 est une vue en coupe du moule de cuisson illustré à la figure 1, la préforme étant reçue dans le moule de cuisson et la vessie étant à l'état dégonflé ;
- la figure 3 est une vue en coupe du moule de cuisson illustré aux figures 1 et 2, la préforme étant reçue dans le moule de cuisson et la vessie étant à l'état gonflé ;
- la figure 4 est une vue de dessus, partielle, du moule de cuisson illustré aux figures 1 à 3 ;
- la figure 5 est un ordinogramme d'un procédé de fabrication d'une pièce de turbomachine en matériau composite, au moyen du moule de cuisson illustré aux figures 1 à 4 ;
- la figure 6 est une vue en perspective d'un exemple de pièce de turbomachine obtenu par la mise en œuvre du procédé de fabrication illustré à la figure 5 ;
- la figure 7 est une vue en perspective d'un autre exemple de pièce de turbomachine obtenu par la mise en œuvre du procédé de fabrication illustré à la figure 5 ;
- la figure 8 est une vue en coupe longitudinale, schématique, d'une turbomachine d'aéronef comprenant la pièce de turbomachine illustrée à la figure 6.

### DESCRIPTION DETAILLEE

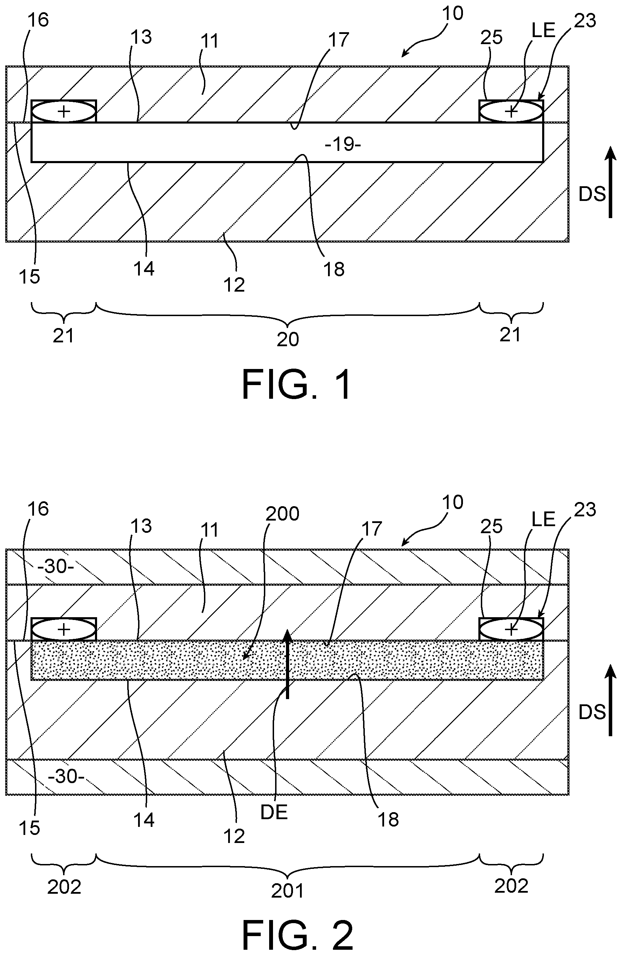

Les figures 1 à 4 montrent un moule de cuisson 10 pour fabriquer une pièce de turbomachine en matériau composite, à partir d'une préforme 200, selon un mode de réalisation de l'invention.

La préforme 200 est réalisée par drapage de pré-imprégnés comprenant des fibres de renfort imprégnés dans une résine thermodurcissable.

La préforme 200 est par exemple réalisée par drapage de pré-imprégnés comprenant des fibres de carbone unidirectionnelles imprégnées dans une résine thermodurcissable époxyde. Ces pré-imprégnés comprennent par exemple 34% en masse de résine thermodurcissable époxyde. Dans la suite de la description, les valeurs fournies sont notamment adaptées à une préforme 200 réalisée par drapage de tels pré-imprégnés.

La préforme 200 est par exemple réalisée par drapage par placement automatisé de fibres, aussi appelé « AFP » qui est l'acronyme d'« Automated Fiber Placement » en terminologie anglo-saxonne. La préforme 200 peut en variante être réalisée par drapage manuel ou automatisé par pose de bande, aussi appelé « ATL » qui est l'acronyme d'« Automated Tape Laying » en terminologie anglo-saxonne. Ces techniques de drapage sont bien connues de l'homme du métier.

Les fibres de renfort de la préforme 200 sont orientées perpendiculairement par rapport à une direction d'empilement DE qui définit une épaisseur de la préforme 200. Les fibres de renfort sont ainsi empilées suivant la direction d'empilement DE. On comprendra qu'en fonction de la géométrie de la préforme 200, notamment de sa ou de ses courbures, la direction d'empilement DE des fibres de renfort de la préforme 200 peut présenter une orientation qui varie d'une zone à l'autre de la préforme 200.

La préforme 200 présente une portion à mouler 201 et au moins une portion supplémentaire 202 s'étendant dans le prolongement de la portion à mouler 201 et formant un bord de la préforme 200. La portion à mouler 201 et la ou chacune des portions supplémentaires 202 sont donc d'un seul tenant. Elles présentent en outre chacune des fibres de renfort imprégnées de la résine.

Le ou chacun des bords de la préforme 200 forme par exemple une portion supplémentaire 202.

Dans l'exemple illustré aux figures 1 à 4, la préforme 200 présente la forme d'une plaque rectangulaire et ne comprend qu'une portion supplémentaire 202 qui forme un bord encadrant rectangulairement la portion à mouler 201. La préforme 200 présente en variante (non représentée) la forme d'une coque.

Le moule de cuisson 10 comprend un premier corps 11 et un deuxième corps 12 conçus pour être rapportés l'un sur l'autre. Le premier et le deuxième corps 11, 12 comprennent chacun une surface interne 13, 14 comprenant elle-même une zone périphérique 15, 16 au niveau de laquelle le premier et le deuxième corps 11, 12 sont en contact l'un avec l'autre suivant une direction de serrage DS, par exemple verticale, et une zone centrale 17, 18. Les zones centrales 17, 18 de la surface interne 13, 14 des premier et deuxième corps 11, 12 définissent ou encore délimitent ensemble un entrefer 19 fixe destiné à recevoir la préforme 200 (figure 1).

L'entrefer 19 comprend lui-même une partie de moulage 20 et au moins une partie supplémentaire 21.

La partie de moulage 20 de l'entrefer 19 est de forme complémentaire avec la pièce de turbomachine à fabriquer. La partie de moulage 20 est en outre destinée à recevoir la portion à mouler 201 de la préforme 200.

La ou les parties supplémentaires 21 de l'entrefer 19 sont situées dans un espace périphérique de l'entrefer 19. Il est entendu par « espace périphérique », un espace de l'entrefer 19 s'étendant le long des zones périphériques 15, 16 des surfaces internes 13, 14 des premier et deuxième corps 11, 12. La ou chacune des parties supplémentaires 21 de l'entrefer 19 est en outre destinée à recevoir une portion supplémentaire 202 de la préforme 200.

Dans l'exemple illustré aux figures 1 à 4, l'entrefer 19 ne comprend qu'une partie supplémentaire 21 qui forme un cadre rectangulaire entourant la partie de moulage 20.

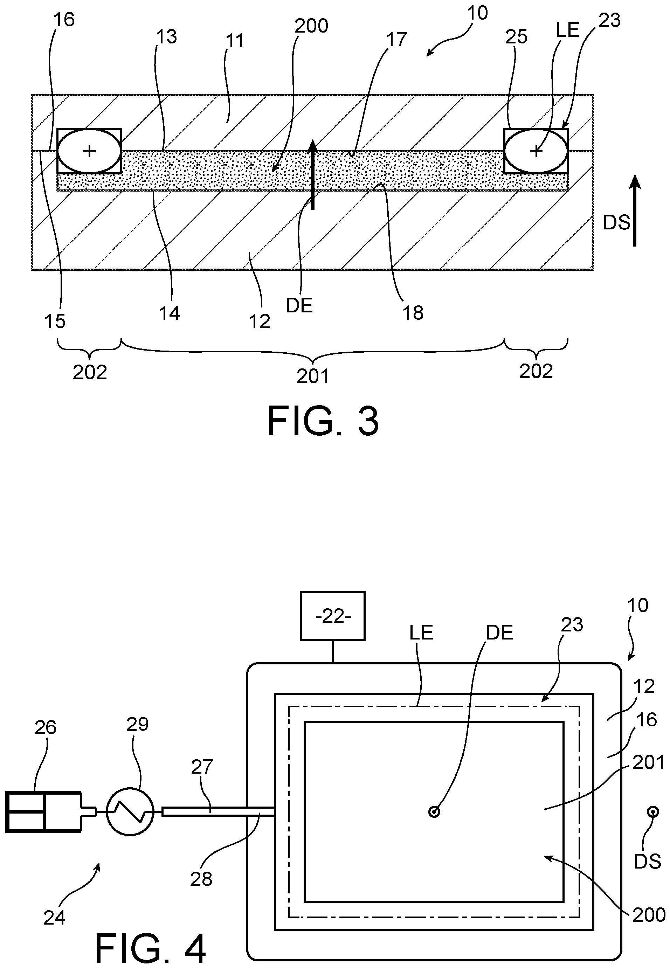

Le moule de cuisson 10 comprend en outre un organe de chauffage 22 conçu pour chauffer la préforme 200 dans l'entrefer 19 à une première température, de sorte à diminuer la viscosité de la résine (figure 4). Cela permet par exemple à la résine de la préforme 200 de se répartir de manière homogène dans l'entrefer 19 du moule de cuisson 10.

La première température est par exemple comprise entre 80 et 110°C inclus. La première température est par exemple maintenue pendant une durée comprise entre 30 et 60min inclus. Cette durée correspond notamment à un palier d'homogénéisation de la température du moule de cuisson 10.

Le moule de cuisson 10 comprend encore au moins une vessie 23 gonflable logée dans la zone centrale 17, 18 de la surface interne 13, 14 du premier ou du deuxième corps 11, 12, en regard d'une partie supplémentaire 21 de l'entrefer 19, ainsi qu'un organe d'injection 24 d'un fluide conçu pour injecter du fluide sous pression à l'intérieur de la ou des vessies 23, de sorte à gonfler la ou les vessies 23 depuis un état dégonflé vers un état gonflé (figures 2 à 4).

La ou chacune des vessies 23 est en outre conçue pour comprimer, à l'état gonflé, la portion supplémentaire 202 de la préforme 200, qui est située dans la partie supplémentaire 21 de l'entrefer 19 en regard de ladite vessie 23, de sorte à chasser la résine de la portion supplémentaire 202 de la préforme 200 vers la portion à mouler 201 de la préforme 200 et ainsi mettre sous pression hydrostatique la préforme 200, lorsque la préforme 200 est reçue dans l'entrefer 19 et que l'organe de chauffage 22 chauffe la préforme 200 à la première température (figure 3). La préforme 200 est par exemple mise sous une pression hydrostatique comprise entre 3 et 10 bar inclus, de préférence entre 3 et 7 bar inclus.

Il est entendu par « fluide sous pression » que le fluide injecté dans la ou les vessies est à une pression telle qu'il provoque le gonflage de la ou des vessies 23 dans l'entrefer 19 et la compression de la ou des portions supplémentaires 202 par la ou les vessies 23.

Ainsi, le moule de cuisson 10 se sert de la résine de la ou des portions supplémentaires 202 de la préforme 200 pour mettre la préforme 200 sous pression hydrostatique. Cette ou ces portions supplémentaires 202 étant de toute façon prévues, lors de la réalisation de la préforme 200, pour être retirées après démoulage, il n'y a donc pas de perte de résine au-delà de celle déjà contenue dans la ou les portions supplémentaires 202. Le moule de cuisson 10 permet ainsi d'éviter un surcoût non négligeable qui serait lié à un apport supplémentaire de résine pour mettre la préforme 200 sous pression hydrostatique. Par ailleurs, dans la mesure où cette ou ces portions supplémentaires 202 sont retirées après démoulage, il n'est pas gênant d'assécher cette ou ces portions supplémentaires 202 de la préforme 200 de leur résine.

L'organe de chauffage 22 est par exemple aussi conçu pour chauffer la préforme 200 à une deuxième température, strictement supérieure à la première température, de sorte à cuire la préforme 200, lorsque ladite préforme 200 est reçue dans l'entrefer 19. La cuisson de la préforme 200 permet de polymériser la résine de la préforme 200 et donc de la consolider, afin d'obtenir la pièce de turbomachine. La deuxième température correspond notamment à une température de polymérisation de la résine de la préforme 200. La deuxième température est par exemple comprise entre 170 et 190°C inclus, notamment égale à 180°C. La deuxième température est par exemple maintenue pendant une durée égale à 2h.

La ou chacune des vessies 23 peut alors être conçue pour poursuivre, à l'état gonflé, la compression exercée sur la portion supplémentaire 202 de la préforme 200, située dans la partie supplémentaire 21 de l'entrefer 19 en regard de ladite vessie 23, lorsque la préforme 200 est reçue dans l'entrefer 19 et que l'organe de chauffage 22 chauffe la préforme 200 à la deuxième température. La cuisson de la préforme 200 se déroule ainsi dans des conditions contrôlées de température et de pression, permettant d'obtenir une pièce de turbomachine de hautes performances mécaniques. La compression exercée sur la portion supplémentaire 202 de la préforme 200 par la ou chacune des vessies 23 est par exemple maintenue pendant la cuisson. En variante, elle est modifiée pour et/ou en cours de cuisson.

L'organe de chauffage 22 est par exemple conçu pour chauffer la préforme 200 par l'intermédiaire des premier et deuxième corps 11, 12 du moule de cuisson 10, lorsque la préforme 200 est reçue dans l'entrefer 19 (figure 4). L'organe de chauffage 22 comprend par exemple une presse telle que décrite ci-dessous, un système de chauffage par fluide caloporteur, tel que de l'huile, ou encore une ou plusieurs cartouches chauffantes intégrées aux premier et deuxième corps 11, 12 du moule de cuisson 10.

La ou chacune des vessies 23 s'étend suivant une ligne d'extension LE qui peut être fermée ou ouverte.

Dans l'exemple illustré aux figures 1 à 4, la ligne d'extension LE de la vessie 23 est fermée et forme un rectangle.

La ou chacune des vessies 23 présente par exemple, à l'état gonflé et à l'état dégonflé, une section transversale, prise perpendiculairement à la ligne d'extension LE, de forme rectangulaire (figures 1 à 3).

La ou chacune des vessies 23 comprend par exemple une membrane extensible formant une poche recevant le fluide sous pression injecté par l'organe d'injection 24. La membrane de la ou de chacune des vessies 23 est par exemple réalisée à partir de silicone.

Le moule de cuisson 10 comprend par exemple une ou plusieurs vessies 23 logées dans la zone centrale 17 de la surface interne 13 du premier corps 11, en regard de la ou d'une partie supplémentaire 21 de l'entrefer 19. La ou les vessies 23 sont en outre conçues pour comprimer, à l'état gonflé, la portion supplémentaire 202 de la préforme 200, située dans ladite partie supplémentaire 21 de l'entrefer 19, contre la zone centrale 18 de la surface interne 14 du deuxième corps 12, lorsque la préforme 200 est reçue dans l'entrefer 19. La ou les portions supplémentaires 202 de la préforme 200 sont alors prises en étau entre une vessie 23 et la zone centrale 18 de la surface interne 14 du deuxième corps 12, qui est opposée à la vessie 23 par rapport à la préforme 200 (figure 3).

En addition ou en variante, le moule de cuisson 10 comprend au moins une paire de vessies 23, une première vessie 23 de la paire étant logée dans la zone centrale 17 de la surface interne 13 du premier corps 11, en regard de la ou d'une partie supplémentaire 21 de l'entrefer 19, et une deuxième vessie 23 de la paire étant logée dans la zone centrale 18 de la surface interne 14 du deuxième corps 12, en regard de ladite partie supplémentaire 21 de l'entrefer 19 et de la première vessie 23. Les première et deuxième vessies 23 se font alors face de sorte à prendre la ou les portions supplémentaires 202 de la préforme 200 en étau entre lesdites première et deuxième vessies 23, lorsque la préforme 200 est reçue dans l'entrefer 19.

La ou chacune des vessies 23 est par exemple conçue pour comprimer, à l'état gonflé, la ou une portion supplémentaire 202 de la préforme 200, située dans la partie supplémentaire 21 de l'entrefer 19 en regard de ladite vessie 23, globalement perpendiculairement par rapport à l'orientation des fibres de renfort de ladite portion supplémentaire 202, lorsque la préforme 200 est reçue dans l'entrefer 19. La ou chacune des vessies 23 compriment ainsi la portion supplémentaire 202 de la préforme 200, qui leur est associée, suivant la direction d'empilement DE de ladite portion supplémentaire 202 (figure 3) de ladite portion supplémentaire 202. Cela permet d'éviter d'abîmer la portion à mouler 201 de la préforme 200.

Pour cela, la ou chacune des vessies 23 est par exemple logée dans la zone centrale 17, 18 de la surface interne 13, 14 du premier ou du deuxième corps 11, 12, en alignement avec la portion supplémentaire 202 de la préforme 200, située dans la partie supplémentaire 21 de l'entrefer 19 en regard de ladite vessie 23, suivant la direction d'empilement DE de ladite portion supplémentaire 202, lorsque la préforme 200 est reçue dans l'entrefer 19.

Le moule de cuisson 10 comprend par exemple au moins une rainure 25 ménagée dans la zone centrale 17, 18 de la surface interne 13, 14 du premier ou du deuxième corps 11, 12 et accueillant la ou l'une des vessies 23. La ou les rainures 25 sont en outre de forme complémentaire avec la ou les vessies 23, lorsque la ou les vessies 23 sont à l'état dégonflé.

Un système de fixation (non représenté) est par exemple prévu pour fixer la ou les vessies 23 dans la ou les rainures 25. Le système de fixation peut comprendre un cadre ou plusieurs portions de cadre qui sont reçus dans la ou chacune dans l'une des rainures 25 et qui sont conçus pour clamper ou encore pour comprimer des bords de la ou des vessies 23 dans la ou les rainures 25.

Le fluide injecté à l'intérieur de la vessie 23 comprend par exemple de l'air, de l'huile, etc.

Le fluide injecté à l'intérieur de la vessie 23 est par exemple un fluide caloporteur, tel que de l'huile, de sorte qu'il participe, en complément de l'organe de chauffage 22, à chauffer la préforme 200. Il est entendu par « fluide caloporteur », un fluide apte à transporter et à évacuer de la chaleur.

L'organe d'injection 24 comprend par exemple un compresseur 26 conçu pour mettre sous pression le fluide à injecter dans la ou chacune des vessies 23 et une conduite d'injection 27 en communication d'une part avec le compresseur 26, et d'autre part avec la ou chacune des vessies 23 via un ou plusieurs canaux 28 ménagés dans le premier et/ou le deuxième corps 11, 12 (figure 4).

L'organe d'injection 24 peut en outre comprendre un échangeur de chaleur 29 conçu pour chauffer le fluide caloporteur à injecter dans la ou chacune des vessies 23 (figure 4). L'échangeur de chaleur 29 est par exemple situé entre le compresseur 26 et la ou les canaux 28 communiquant avec la ou les vessies 23. Le fluide caloporteur permet ainsi de chauffer, via le ou les canaux 28, le premier et/ou le deuxième corps 11, 12 qui chauffent alors eux-mêmes la préforme 200.

Le moule de cuisson 10 peut encore comprendre une presse 30 conçue pour comprimer les premier et deuxième corps 11, 12 l'un contre l'autre suivant la direction de serrage DS, lorsque les premier et deuxième corps 11, 12 sont rapportés l'un sur l'autre (figure 2). La presse 30 permet ainsi d'assurer le serrage des premier et deuxième corps 11, 12 du moule de cuisson 10 l'un contre l'autre, et de vaincre le foisonnement de la préforme 200. La presse 30 permet aussi d'assurer le contact des zones périphériques 15, 16 des surfaces interne 13, 14 des premier et deuxième corps 11, 12 du moule de cuisson 10, et ainsi d'éviter les fuites de résine.

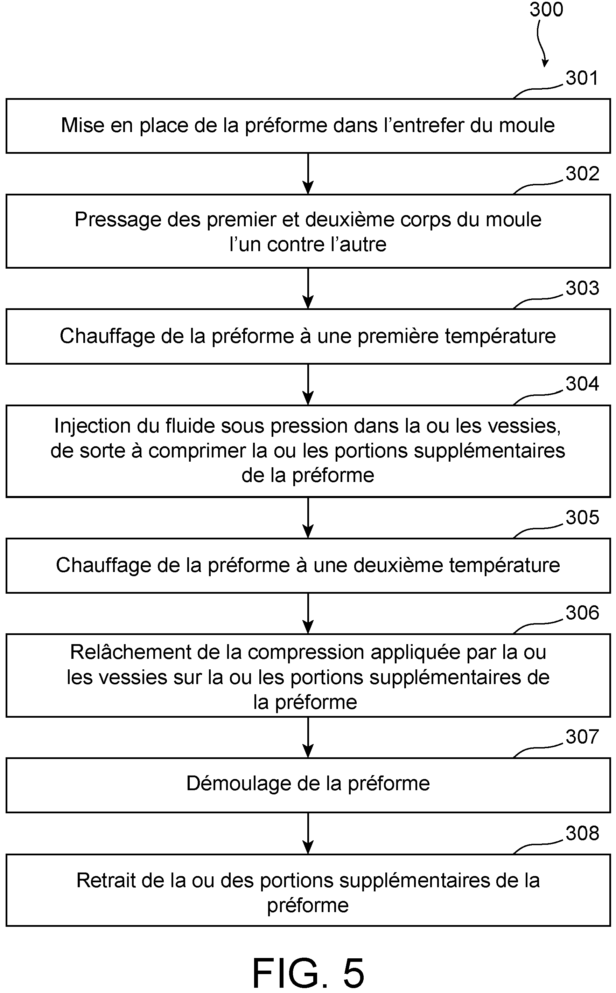

La figure 5 montre un procédé de fabrication 300 de fabrication d'une pièce de turbomachine en matériau composite au moyen du moule de cuisson 10. Le procédé de fabrication 300 comprend les étapes de :
- mise en place 301 de la préforme 200 dans l'entrefer 19, entre les premier et deuxième corps 11, 12 du moule de cuisson 10, la portion à mouler 201 de la préforme 200 étant logée dans la partie de moulage 20 de l'entrefer 19, une portion supplémentaire 202 de la préforme 200 étant logée dans la ou dans chacune des parties supplémentaires 21 de l'entrefer 19 ;
- le cas échéant, pressage 302 des premier et deuxième corps 11, 12 du moule de cuisson 10 l'un contre l'autre suivant la direction de serrage DS ;
- chauffage 303 de la préforme 200 à la première température ;
- injection 304 du fluide sous pression dans la ou dans chacune des vessies 23, de sorte que la ou chacune des vessies 23 gonfle jusqu'à l'état gonflé et comprime la portion supplémentaire 202 de la préforme 200 située dans la partie supplémentaire 21 de l'entrefer 19 en regard de ladite vessie 23, la préforme 200 étant maintenue à la première température.

La préforme 200 est par exemple mise sous une pression hydrostatique comprise entre 3 et 10 bar inclus, de préférence entre 3 et 7 bar inclus.

Le procédé de fabrication 300 peut encore comprendre les étapes ultérieures de :
- chauffage 305 de la préforme 200 à la deuxième température, de sorte à cuire la préforme 200, la compression appliquée par la ou les vessies 23 à l'état gonflé sur la ou les portions supplémentaires 202 de la préforme 200 étant poursuivie ;
- relâchement 306 de la compression appliquée par la ou les vessies 23 sur la ou les portions supplémentaires 202 de la préforme 200 ainsi cuite ;
- démoulage 307 de la préforme 200 ainsi cuite ;
- retrait 308 de la ou des portions supplémentaires 202 de la préforme 200 ainsi cuite et démoulée, notamment par usinage, de sorte à obtenir la pièce de turbomachine.

L'étape de relâchement 306 intervient par exemple dès le gel de la résine de la préforme 200 dans le moule de cuisson 10.

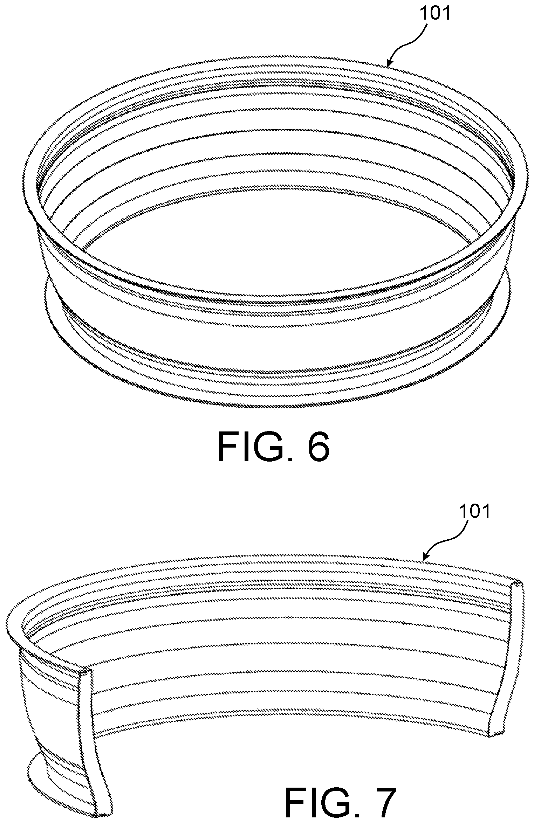

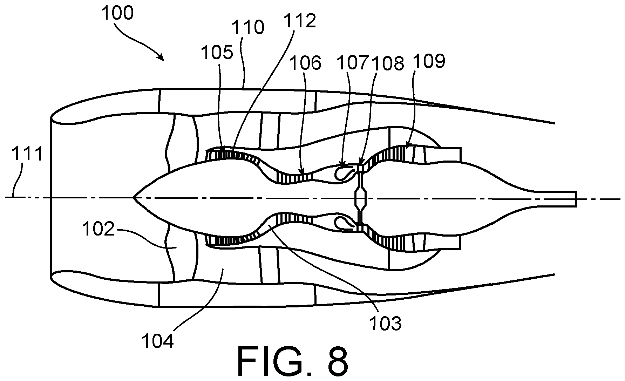

Les figures 6 et 7 montrent chacune un exemple de pièce de turbomachine 101 en matériau composite obtenue par la mise en œuvre du procédé de fabrication 300. La figure 8 montre une turbomachine 100 pour aéronef comprenant la pièce de turbomachine 101.

La turbomachine 100 est à double flux. Elle comprend une soufflante 102 destinée à l'aspiration d'un flux d'air se divisant en aval de la soufflante 102 en un flux primaire circulant dans un canal d'écoulement de flux primaire, appelé veine primaire 103, au sein d'un cœur de la turbomachine 100, et un flux secondaire contournant ce cœur dans un canal d'écoulement de flux secondaire, appelé veine secondaire 104.

Le cœur de la turbomachine 100 comporte, d'amont en aval dans le sens d'écoulement de l'air, un compresseur basse pression 105, aussi appelé « booster », un compresseur haute pression 106, une chambre de combustion 107, une turbine haute pression 108 et une turbine basse pression 109.

Des rotors respectifs du compresseur haute pression 106 et de la turbine haute pression 108 sont reliés par un arbre dit « arbre haute pression », tandis que des rotors respectifs du compresseur basse pression 105 et de la turbine basse pression 109 sont reliés par un arbre dit « arbre basse pression » entouré par l'arbre haute pression.

La turbomachine 100 est carénée par une nacelle 110 entourant la veine secondaire 104.

Par ailleurs, les rotors de la turbomachine 100 sont montés rotatifs autour d'une direction longitudinale 111 de la turbomachine 100.

Le compresseur basse pression 105 comprend, en plus d'un ou plusieurs rotors, un ou plusieurs stators agencés en alternance avec les rotors suivant la direction longitudinale 111.

Les stators comprennent des aubes s'étendant radialement par rapport à la direction longitudinale 111 entre une virole interne et une virole externe (non représentées) par l'intermédiaire de laquelle lesdites aubes sont portées par un carter externe 112.

La pièce de turbomachine 101 forme par exemple le carter externe 112 du compresseur basse pression 105 (figure 6). La pièce de turbomachine 101 peut aussi former un secteur du carter externe 112 du compresseur basse pression 105 (figure 7). Il est entendu par « secteur », un secteur angulaire du carter externe autour de la direction longitudinale 111. En variante (non représentée), la pièce de turbomachine 101 forme un tambour de rotor.

## Revendications

1. Moule de cuisson (10) pour fabriquer une pièce de turbomachine en matériau composite, à partir d'une préforme (200) réalisée par drapage de pré-imprégnés comprenant des fibres de renfort imprégnés dans une résine thermodurcissable, la préforme (200) présentant une portion à mouler (201) et au moins une portion supplémentaire (202) s'étendant dans le prolongement de la portion à mouler (201) et formant un bord de la préforme (200), le moule de cuisson (10) comprenant :
- un premier corps (11) et un deuxième corps (12) conçus pour être rapportés l'un sur l'autre, le premier et le deuxième corps (11, 12) comprenant chacun une surface interne (13, 14) comprenant elle-même une zone périphérique (15, 16) au niveau de laquelle le premier et le deuxième corps (11, 12) sont en contact l'un avec l'autre et une zone centrale (17, 18) définissant un entrefer (19) fixe entre les premier et deuxième corps (11, 12), l'entrefer (19) étant destiné à recevoir la préforme (200) et comprenant lui-même :
∘ une partie de moulage (20) de forme complémentaire avec la pièce à fabriquer, la partie de moulage (20) étant destinée à recevoir la portion à mouler (201) de la préforme (200), et
∘ au moins une partie supplémentaire (21) située dans un espace périphérique de l'entrefer (19), la ou chacune des parties supplémentaires (21) étant destinée à recevoir une portion supplémentaire (202) de la préforme (200) ;
- un organe de chauffage (22) conçu pour chauffer la préforme (200) dans l'entrefer (19) à une première température, de sorte à diminuer la viscosité de la résine ;
- au moins une vessie (23) gonflable logée dans la zone centrale (17, 18) de la surface interne (13, 14) du premier ou du deuxième corps (12, 13), en regard d'une partie supplémentaire (21) de l'entrefer (19) ;
- un organe d'injection (24) d'un fluide conçu pour injecter du fluide sous pression à l'intérieur de la ou des vessies (23), de sorte à gonfler la ou les vessies (23) depuis un état dégonflé vers un état gonflé, la ou chacune des vessies (23) étant en outre conçue pour comprimer, à l'état gonflé, la portion supplémentaire (202) de la préforme (200), située dans la partie supplémentaire (21) de l'entrefer (19) en regard de ladite vessie (23), de sorte à chasser la résine de la portion supplémentaire (202) de la préforme (200) vers la portion à mouler (201) de la préforme (200) et ainsi mettre la préforme (200) sous pression hydrostatique, lorsque la préforme (200) est reçue dans l'entrefer (19) et que l'organe de chauffage (22) chauffe la préforme (200) à la première température.

2. Moule de cuisson (10) selon la revendication 1, dans lequel :
- les fibres de renfort de la préforme (200) sont orientés perpendiculairement par rapport à une direction d'empilement (DE) ;
- la ou les vessies (23) sont logées dans la zone centrale (17, 18) de la surface interne (13, 14) du premier ou du deuxième corps (11, 12), en alignement avec la portion supplémentaire (202) de la préforme (200) suivant la direction d'empilement (DE) de ladite portion supplémentaire (202), lorsque la préforme (200) est reçue dans l'entrefer (19) du moule de cuisson (10).

3. Moule de cuisson (10) selon la revendication 1 ou la revendication 2, dans lequel l'organe d'injection (24) comprend un compresseur (26) conçu pour mettre sous pression le fluide à injecter dans la ou chacune des vessies (23) et une conduite d'injection (27) en communication d'une part avec le compresseur (26), et d'autre part avec la ou chacune des vessies (23), via un ou plusieurs canaux (28) ménagés dans le premier et/ou le deuxième corps (11, 12).

4. Moule de cuisson (10) selon l'une des revendications 1 à 3, dans lequel le fluide injecté dans la ou chacune des vessies (23) est un fluide caloporteur et dans lequel l'organe d'injection (24) comprend un échangeur de chaleur (29) conçu pour chauffer le fluide caloporteur à injecter dans la ou chacune des vessies (23).

5. Moule de cuisson (10) selon l'une des revendications 1 à 4, dans lequel l'organe de chauffage (22) est conçu pour chauffer la préforme (200) à une deuxième température, strictement supérieure à la première température, de sorte à cuire la préforme (200), et dans lequel la ou chacune des vessies (23) est conçue pour poursuivre, à l'état gonflé, la compression exercée sur la portion supplémentaire (202) de la préforme (200), située dans la partie supplémentaire (21) de l'entrefer (19) en regard de ladite vessie (23), lorsque la préforme (200) est reçue dans l'entrefer (19) et que l'organe de chauffage (22) chauffe la préforme (200) à la deuxième température.

6. Procédé de fabrication (300) d'une pièce de turbomachine en matériau composite, au moyen du moule de cuisson (10) selon l'une des revendications 1 à 5, à partir d'une préforme (200) réalisée par drapage de pré-imprégnés comprenant des fibres de renfort imprégnés dans une résine thermodurcissable, la préforme (200) présentant une portion à mouler (201) et au moins une portion supplémentaire (202) s'étendant dans le prolongement de la portion à mouler (201) et formant un bord de la préforme (200), le procédé de fabrication (300) comprenant les étapes de :
- mise en place (301) de la préforme (200) dans l'entrefer (19), entre les premier et deuxième corps (11, 12) du moule de cuisson (10), la portion à mouler (201) de la préforme (200) étant logée dans la partie de moulage (20) de l'entrefer (19), une portion supplémentaire (202) de la préforme (200) étant logée dans la ou dans chacune des parties supplémentaires (21) de l'entrefer (19) ;
- chauffage (303) de la préforme (200) à la première température ;
- injection (304) du fluide sous pression dans la ou dans chacune des vessies (23), de sorte que la ou chacune des vessies (23) gonfle jusqu'à l'état gonflé et comprime la portion supplémentaire (202) de la préforme (200) située dans la partie supplémentaire (21) de l'entrefer (19) en regard de ladite vessie (23), la préforme (200) étant maintenue à la première température, la ou chacune des vessies (23) chassant la résine de la portion supplémentaire (202) de la préforme (200) vers la portion à mouler (201) de la préforme (200), la préforme (200) étant ainsi mise sous pression hydrostatique.

7. Procédé de fabrication (300) selon la revendication 6, comprenant l'étape ultérieure de chauffage (305) de la préforme (200) à une deuxième température, strictement supérieure à la première température, de sorte à cuire la préforme (200), la compression appliquée par la ou les vessies (23) à l'état gonflé sur la ou les portions supplémentaires (202) de la préforme (200) étant poursuivie.

8. Procédé de fabrication (300) selon la revendication 7, comprenant les étapes ultérieures de :
- relâchement (306) de la compression appliquée par la ou les vessies (23) sur la ou les portions supplémentaires (202) de la préforme (200) ainsi cuite ;
- démoulage (307) de la préforme (200) ainsi cuite ;
- retrait (308) de la ou des portions supplémentaires (202) de la préforme (200) ainsi cuite et démoulée, de sorte à obtenir la pièce de turbomachine.

9. Procédé de fabrication (300) selon l'une des revendications 6 à 8, dans lequel la préforme (200) est mise sous une pression hydrostatique comprise entre 3 et 10 bar inclus, lors de l'étape d'injection du fluide sous pression dans la ou chacune des vessies.

10. Procédé de fabrication (300) selon l'une des revendications 6 à 9, dans lequel la préforme (200) est mise sous une pression hydrostatique comprise entre 3 et 7 bar inclus, lors de l'étape d'injection du fluide sous pression dans la ou chacune des vessies.

11. Procédé de fabrication (300) l'une des revendications 6 à 10, dans lequel :
- les fibres de renfort de la préforme (200) sont orientés perpendiculairement par rapport à une direction d'empilement (DE) ;
- la ou les vessies (23) sont logées dans la zone centrale (17, 18) de la surface interne (13, 14) du premier ou du deuxième corps (11, 12), en alignement avec la portion supplémentaire (202) de la préforme (200) suivant la direction d'empilement (DE) de ladite portion supplémentaire (202), lorsque la préforme (200) est reçue dans l'entrefer (19) du moule de cuisson (10).

12. Procédé de fabrication (300) selon l'une des revendications 6 à 11, dans lequel le fluide injecté dans la ou chacune des vessies (23) est un fluide caloporteur et dans lequel l'organe d'injection (24) comprend un échangeur de chaleur (29) conçu pour chauffer le fluide caloporteur à injecter dans la ou chacune des vessies (23).

## Patentansprüche

1. Aushärteform (10) zur Herstellung eines Bauteils einer Turbomaschine aus einem Verbundwerkstoff, ausgehend von einer Vorform (200), die durch das Ablegen von Prepregs hergestellt ist, welche Verstärkungsfasern enthalten, die in eine duroplastische Harzmatrix eingebettet sind, wobei die Vorform (200) einen zu formenden Abschnitt (201) und mindestens einen zusätzlichen Abschnitt (202) aufweist, der sich in Verlängerung des zu formenden Abschnitts (201) erstreckt und einen Rand der Vorform (200) bildet, wobei die Aushärteform (10) aufweist:
- einen ersten Körper (11) und einen zweiten Körper (12), die so ausgestaltet sind, dass sie zusammengefügt werden können, wobei der erste und der zweite Körper (11, 12) jeweils eine Innenfläche (13, 14) aufweisen, die ihrerseits einen Randbereich (15, 16) umfasst, an dem der erste und der zweite Körper (11, 12) miteinander in Kontakt stehen, sowie einen zentralen Bereich (17, 18), der einen festen Hohlraum (19) zwischen dem ersten und dem zweiten Körper (11, 12) definiert, wobei der Hohlraum (19) zur Aufnahme der Vorform (200) vorgesehen ist und seinerseits umfasst:
∘ einen Formteil (20) mit einer zum herzustellenden Bauteil komplementären Form, wobei der Formteil (20) zur Aufnahme des zu formenden Abschnitts (201) der Vorform (200) vorgesehen ist, und
∘ mindestens einen zusätzlichen Teil (21), der sich in einem Randbereich des Hohlraums (19) befindet, wobei der bzw. jeder zusätzliche Teil (21) zur Aufnahme eines zusätzlichen Abschnitts (202) der Vorform (200) vorgesehen ist;
- ein Heizelement (22), das dazu eingerichtet ist, die Vorform (200) im Hohlraum (19) auf eine erste Temperatur zu erhitzen, um die Viskosität des Harzes zu verringern;
- mindestens eine aufblasbare Blase (23), die im zentralen Bereich (17, 18) der Innenfläche (13, 14) des ersten oder zweiten Körpers (11, 12) untergebracht ist, gegenüberliegend zu einem zusätzlichen Teil (21) des Hohlraums (19);
- ein Einspritzglied (24), das dazu eingerichtet ist, ein Fluid unter Druck in die Blase(n) (23) einzuspritzen, um die Blase(n) (23) von einem entleerten in einen aufgeblasenen Zustand zu überführen, wobei die bzw. jede Blase (23) ferner so ausgestaltet ist, dass sie im aufgeblasenen Zustand den zusätzlichen Abschnitt (202) der Vorform (200), der sich im zusätzlichen Teil (21) des Hohlraums (19) gegenüber der jeweiligen Blase (23) befindet, komprimiert, um Harz aus dem zusätzlichen Abschnitt (202) der Vorform (200) in Richtung des zu formenden Abschnitts (201) der Vorform (200) zu verdrängen und so die Vorform (200) unter hydrostatischen Druck zu setzen, wenn sich die Vorform (200) im Hohlraum (19) befindet und das Heizelement (22) die Vorform (200) auf die erste Temperatur erhitzt.

2. Aushärteform (10) nach Anspruch 1, wobei:
- die Verstärkungsfasern der Vorform (200) senkrecht zu einer Stapelrichtung (DE) ausgerichtet sind;
- die Blase(n) (23) sich im zentralen Bereich (17, 18) der Innenfläche (13, 14) des ersten oder zweiten Körpers (11, 12) befindet(n), ausgerichtet mit dem zusätzlichen Abschnitt (202) der Vorform (200) entlang der Stapelrichtung (DE) dieses zusätzlichen Abschnitts (202), wenn sich die Vorform (200) im Hohlraum (19) der Aushärteform (10) befindet.

3. Aushärteform (10) nach Anspruch 1 oder 2, wobei das Einspritzglied (24) einen Kompressor (26) umfasst, der dazu eingerichtet ist, das einzuspritzende Fluid unter Druck zu setzen, sowie eine Einspritzleitung (27), die einerseits mit dem Kompressor (26) und andererseits mit der bzw. jeder Blase (23) über einen oder mehrere in den ersten und/oder zweiten Körper (11, 12) ausgebildete Kanäle (28) in Verbindung steht.

4. Aushärteform (10) nach einem der Ansprüche 1 bis 3, wobei das in die bzw. jede Blase (23) eingespritzte Fluid ein wärmetransportierendes Fluid ist und wobei das Einspritzglied (24) einen Wärmetauscher (29) umfasst, der dazu eingerichtet ist, das wärmetransportierende Fluid für die Einspritzung in die bzw. jede Blase (23) zu erhitzen.

5. Aushärteform (10) nach einem der Ansprüche 1 bis 4, wobei das Heizelement (22) dazu eingerichtet ist, die Vorform (200) auf eine zweite Temperatur, die höher ist als die erste Temperatur, zu erhitzen, um die Vorform (200) auszuhärten, und wobei die bzw. jede Blase (23) so ausgestaltet ist, dass im aufgeblasenen Zustand die auf den zusätzlichen Abschnitt (202) der Vorform (200), der sich im zusätzlichen Teil (21) des Hohlraums (19) gegenüber der jeweiligen Blase (23) befindet, ausgeübte Kompression beibehalten wird, wenn sich die Vorform (200) im Hohlraum (19) befindet und das Heizelement (22) die Vorform (200) auf die zweite Temperatur erhitzt.

6. Verfahren (300) zur Herstellung eines Bauteils einer Turbomaschine aus einem Verbundwerkstoff unter Verwendung der Aushärteform (10) nach einem der Ansprüche 1 bis 5, ausgehend von einer Vorform (200), die durch das Ablegen von Prepregs hergestellt ist, welche Verstärkungsfasern enthalten, die in ein duroplastisches Harz eingebettet sind, wobei die Vorform (200) einen zu formenden Abschnitt (201) und mindestens einen zusätzlichen Abschnitt (202) aufweist, der sich in Verlängerung des zu formenden Abschnitts (201) erstreckt und einen Rand der Vorform (200) bildet, wobei das Herstellungsverfahren (300) folgende Schritte umfasst:
- Einlegen (301) der Vorform (200) in den Hohlraum (19) zwischen den ersten und zweiten Körper (11, 12) der Aushärteform (10), wobei sich der zu formende Abschnitt (201) der Vorform (200) im Formteil (20) des Hohlraums (19) befindet und sich ein zusätzlicher Abschnitt (202) der Vorform (200) im bzw. in jedem zusätzlichen Teil (21) des Hohlraums (19) befindet;
- Erhitzen (303) der Vorform (200) auf die erste Temperatur;
- Einspritzen (304) eines unter Druck stehenden Fluids in die bzw. jede Blase (23), sodass die Blase(n) (23) in den aufgeblasenen Zustand übergeht/übergehen und den zusätzlichen Abschnitt (202) der Vorform (200), der sich im zusätzlichen Teil (21) des Hohlraums (19) gegenüber der jeweiligen Blase (23) befindet, komprimiert/komprimieren, wobei sich die Vorform (200) auf der ersten Temperatur befindet, und die Blase(n) (23) Harz aus dem zusätzlichen Abschnitt (202) der Vorform (200) in Richtung des zu formenden Abschnitts (201) der Vorform (200) verdrängt/ verdrängen, wodurch die Vorform (200) unter hydrostatischen Druck gesetzt wird.

7. Herstellungsverfahren (300) nach Anspruch 6, umfassend den nachfolgenden Schritt (305), in dem die Vorform (200) auf eine zweite Temperatur, die höher ist als die erste Temperatur, erhitzt wird, um die Vorform (200) auszuhärten, wobei die von der/dem Blase(n) (23) im aufgeblasenen Zustand auf den/die zusätzliche(n) Abschnitt(e) (202) der Vorform (200) ausgeübte Kompression aufrechterhalten wird.

8. Herstellungsverfahren (300) nach Anspruch 7, umfassend nachfolgende Schritte zum:
- Freigeben (306) der von der/dem Blase(n) (23) auf den/die zusätzliche(n) Abschnitt(e) (202) der ausgehärteten Vorform (200) ausgeübten Kompression;
- Entformen (307) der ausgehärteten Vorform (200);
- Entfernen (308) der zusätzlichen Abschnitt(e) (202) der ausgehärteten und entformten Vorform (200), um das Turbomaschinenbauteil zu erhalten.

9. Herstellungsverfahren (300) nach einem der Ansprüche 6 bis 8, wobei die Vorform (200) während des Einspritzschritts des unter Druck stehenden Fluids in die bzw. jede Blase einem hydrostatischen Druck zwischen einschließlich 3 und 10 bar ausgesetzt wird.

10. Herstellungsverfahren (300) nach einem der Ansprüche 6 bis 9, wobei die Vorform (200) während des Einspritzschritts des unter Druck stehenden Fluids in die bzw. jede Blase einem hydrostatischen Druck zwischen einschließlich 3 und 7 bar ausgesetzt wird.

11. Herstellungsverfahren (300) nach einem der Ansprüche 6 bis 10, wobei:
- die Verstärkungsfasern der Vorform (200) senkrecht zu einer Stapelrichtung (DE) ausgerichtet sind;
- die Blase(n) (23) sich im zentralen Bereich (17, 18) der Innenfläche (13, 14) des ersten oder zweiten Körpers (11, 12) befindet(n), ausgerichtet mit dem zusätzlichen Abschnitt (202) der Vorform (200) entlang der Stapelrichtung (DE) dieses zusätzlichen Abschnitts (202), wenn sich die Vorform (200) im Hohlraum (19) der Aushärteform (10) befindet.

12. Herstellungsverfahren (300) nach einem der Ansprüche 6 bis 11, wobei das in die bzw. jede Blase (23) eingespritzte Fluid ein wärmetransportierendes Fluid ist und wobei das Einspritzglied (24) einen Wärmetauscher (29) umfasst, der dazu eingerichtet ist, das wärmetransportierende Fluid für die Einspritzung in die bzw. jede Blase (23) zu erhitzen.

## Claims

1. Curing mold (10) for manufacturing a turbomachine component made of a composite material, starting from a preform (200) made by laying up prepregs comprising reinforcing fibers impregnated in a thermosetting resin, the preform (200) having a portion to be molded (201) and at least one additional portion (202) extending into the prolongation of the portion to be molded (201) and forming an edge of the preform (200), the curing mold (10) comprising:
- a first body (11) and a second body (12) designed to be fitted together, the first and second bodies (11, 12) each comprising an internal surface (13, 14) itself comprising a peripheral area (15, 16) at which the first and second bodies (11, 12) are in contact with each other and a central area (17, 18) defining a fixed air gap (19) between the first and second bodies (11, 12), the air gap (19) being intended to accommodate the preform (200) and itself comprising:
∘ a molding part (20) with a shape complementary to the component to be manufactured, the molding part (20) being intended to accommodate the portion to be molded (201) of the preform (200), and
∘ at least one additional part (21) located in a peripheral space of the air gap (19), the or each additional part (21) being intended to accommodate an additional portion (202) of the preform (200);
- a heating member (22) designed to heat the preform (200) in the air gap (19) to a first temperature, so as to reduce the viscosity of the resin;
- at least one inflatable bladder (23) housed in the central area (17, 18) of the internal surface (13, 14) of the first or second body (12, 13), facing an additional part (21) of the air gap (19);
- an injection member (24) designed to inject fluid under pressure inside the bladder(s) (23), so as to inflate the bladder(s) (23) from a deflated state to an inflated state, and the or each bladder (23) also being designed so that, in the inflated state, it compresses the additional portion (202) of the preform (200) located in the additional part (21) of the air gap (19) facing said bladder (23), so as to flush the resin from the additional portion (202) of the preform (200) towards the portion to be molded (201) of the preform (200) and thus put the preform (200) under hydrostatic pressure, when the preform (200) is located in the air gap (19) and the heating member (22) heats the preform (200) to the first temperature.

2. Curing mold (10) according to claim 1, wherein:
- the reinforcing fibers of the preform (200) are oriented perpendicular to a stacking direction (DE);
- the bladder(s) (23) is (are) located in the central area (17, 18) of the internal surface (13, 14) of the first or second body (11, 12), in alignment with the additional portion (202) of the preform (200) along the stacking direction (DE) of said additional portion (202), when the preform (200) is located in the air gap (19) of the curing mold (10).

3. Curing mold (10) according to claim 1 or claim 2, wherein the injection member (24) comprises a compressor (26) designed to pressurize the fluid to be injected into the or each bladder (23) and an injection conduit (27) in communication, on the one hand, with the compressor (26) and on the other hand, with the or each bladder (23), via one or more channels (28) formed in the first and/or second body (11, 12).

4. Curing mold (10) according to one of claims 1 to 3, wherein the fluid injected into the or each bladder (23) is a heat transporting fluid and wherein the injection member (24) comprises a heat exchanger (29) designed to heat the heat transporting fluid to be injected into the or each bladder (23).

5. Curing mold (10) according to one of claims 1 to 4, wherein the heating member (22) is designed to heat the preform (200) to a second temperature, higher than the first temperature so as to cure the preform (200) and wherein the or each bladder (23) is designed so that, in the inflated state, the compression exerted on the additional portion (202) of the preform (200) located in the additional part (21) of the air gap (19) facing said bladder (23) is maintained when the preform (200) is located in the air gap (19) and the heating member (22) heats the preform (200) to the second temperature.

6. Method (300) for manufacturing a turbomachine component made of composite material, making use of the curing mold (10) according to one of claims 1 to 5, starting from a preform (200) made by laying up prepregs comprising reinforcing fibers impregnated in a thermosetting resin, the preform (200) having a portion to be molded (201) and at least one additional portion (202) extending into the prolongation of the portion to be molded (201) and forming an edge of the preform (200), the manufacturing method (300) comprising the following steps:
- place (301) the preform (200) in the air gap (19), between the first and second bodies (11, 12) of the curing mold (10), the portion to be molded (201) of the preform (200) being located in the molding part (20) of the air gap (19), an additional portion (202) of the preform (200) being located in the or in each additional part (21) of the air gap (19);
- heat (303) the preform (200) to the first temperature;
- inject (304) pressurized fluid into the or each bladder (23), so that the or each bladder (23) is inflated to the inflated state and compresses the additional portion (202) of the preform (200) located in the additional part (21) of the air gap (19) facing said bladder (23), the preform (200) being maintained at the first temperature, the or each bladder (23) flushing resin from the additional portion (202) of the preform (200) to the portion to be molded (201) of the preform (200), thus putting the preform (200) under hydrostatic pressure.

7. Manufacturing method (300) according to claim 6, comprising the subsequent step (305) to heat the preform (200) to a second temperature, higher than the first temperature, so as to cure the preform (200), the compression applied by the bladder(s) (23) in the inflated state on the additional portion(s) (202) of the preform (200) being maintained.

8. Manufacturing method (300) according to claim 7, comprising subsequent steps to:
- release (306) the compression applied by the bladder(s) (23) on the additional portion(s) (202) of the preform (200) thus cured;
- unmould (307) the preform (200) thus cured;
- remove (308) the additional portion(s) (202) of the preform (200) thus cured and demoulded, so as to obtain the turbomachine component.

9. Manufacturing method (300) according to one of claims 6 to 8, wherein the preform (200) is put under a hydrostatic pressure between 3 and 10 bar inclusive, during the step to inject pressurized fluid into the or each bladder.

10. Manufacturing method (300) according to one of claims 6 to 9, wherein the preform (200) is put under a hydrostatic pressure between 3 and 7 bar inclusive, during the step to inject pressurized fluid into the or each bladder.

11. Manufacturing method (300) according to one of claims 6 to 10, wherein:
- the reinforcing fibers of the preform (200) are oriented perpendicular to a stacking direction (DE);
- the bladder(s) (23) is (are) located in the central area (17, 18) of the internal surface (13, 14) of the first or second body (11, 12), in alignment with the additional portion (202) of the preform (200) along the stacking direction (DE) of said additional portion (202), when the preform (200) is located in the air gap (19) of the curing mold (10).

12. Manufacturing method according to one of claims 6 to 11, wherein the fluid injected into the or each bladder (23) is a heat transporting fluid and wherein the injection member (24) comprises a heat exchanger (29) designed to heat the heat transporting fluid to be injected into the or each bladder (23).
